# EUROPEAN PATENT APPLICATION

(11) **EP 4 394 335 A1**
(43) Date of publication of application: **03.07.2024**
(21) Application number: 22929481.4
(22) Date of filing: 10.06.2022
(51) Int. Cl.: G01F 1/84, G01F 15/00, G01F 15/18

(54) **CORIOLIS MASS FLOWMETER WITH NON-CIRCULAR SECTION**

(30) Priority: 02.03.2022 CN 202210201401
(71) Applicant: Walsn Measurement and Control Technology (Hebei) Co., Ltd, Langfang, Hebei 065000 (CN); Walsn Limited, Canterbury Kent CT2 7FG (GB)
(72) Inventor: WANG, Tao, Langfang, Hebei 065000 (CN); MA, Chunli, Langfang, Hebei 065000 (CN)
(74) Representative: Isern Patentes y Marcas S.L.
(86) International application number: PCT/CN2022/098042
(87) International publication number: WO 2023/165046

(57) **Abstract**

A Coriolis mass flowmeter with a non-circular section. The mass flow meter comprises a flow inlet device and a flow outlet device. The flow inlet device and the outlet device each comprise a flange connecting disc (1), a flange sealing disc (2), a connector (3) and a flow tube (5a, 5b). The flange sealing disc (2) is attached to the outer surface of the flange connecting disc (1). The connector (3) is connected to the flange connecting disc (1). The main body of the flow tube (5a, 5b) is located in the connector (3), and an outlet of the flow tube (5a, 5b) is connected to the flange sealing disc (2). The cross section of a measurement body of the flow tube (5a, 5b) is a circular cross section, and the cross section of the outlet of the flow tube (5a, 5b) is a non-circular cross section. On the premise of ensuring that the function and performance of the Coriolis mass flowmeter are not affected, the design and manufacturing process of a Coriolis mass flowmeter sensor is greatly simplified, and the production and manufacturing cost of the sensor is effectively reduced.

## Description

### TECHNICAL FIELD

The present disclosure relates to a Coriolis mass flowmeter, and in particular to a Coriolis mass flowmeter with a non-circular section.

### BACKGROUND

Traditional Coriolis mass flowmeter sensor is mainly composed of a flange, a flow divider, a flow tube, a housing, and flow tube accessories (e.g., node plates, coil assembly, etc.). Liquid contact parts of the sensor are a flange, a flow divider and a measuring tube. The flange is configured to connect an external pipeline, the flow divider is configured to evenly distribute media to two or more flow tubes. For some special media, such as corrosive media, the liquid contact parts need to be made of special materials, such as Hastelloy (Hastelloy C22). If such special materials are chosen to manufacture the flange and flow divider, the cost will be higher, especially for large-caliber flowmeters, the weight is heavier, and the cost is higher.

In order to solve the above problems, a new design idea is provided, which abandons the traditional design of the flange and the flow divider and simplifies the design forms of the flange and the flow divider, such that the flange and the flow divider no longer function as the liquid contact parts, but only play a role of stiffness support. As for the flow tube, a design scheme of a flow tube with a non-circular cross section at a tube end is innovatively adopted, the flow tube extends to an end face of a flange to be connected to a flange sealing disc, and thus a liquid contact surface is achieved by the flow tube.

### SUMMARY

A Coriolis mass flowmeter with a non-circular section is provided by the present disclosure. The mass flowmeter includes a flow inlet device, and a flow outlet device. The flow inlet device and the flow outlet device each include a flange connecting disc, a flange sealing disc, a connector, and a flow tube. The flange sealing disc is attached to an outer surface of the flange connecting disc. The connector is connected to the flange connecting disc. A body of the flow tube is located in the connector, and an outlet of the flow tube is connected to the flange sealing disc. The cross section of a measurement body of the flow tube is a circular cross section, and the cross section of the outlet of the flow tube is a non-circular cross section.

Preferably, the Coriolis mass flowmeter further includes a bridge, the bridge is configured to connect the connector of the flow inlet device and the connector of the flow outlet device.

Preferably, the flow tube includes a first flow tube and a second flow tube, stiffness of each of the first flow tube and the second flow tube is asymmetrical in two orthogonal directions of a cross section of a corresponding one of the first flow tube and the second flow tube.

Preferably, an outer surface of the flange sealing disc includes a sealing water line.

Preferably, the flange sealing disc and the flow tube are made of corrosion-resistant materials.

Some embodiments have the following effects: on the premise of ensuring that the function and performance of the Coriolis mass flowmeter are not affected, the design and manufacturing process of a Coriolis mass flowmeter sensor is greatly simplified, and the production and manufacturing cost of the sensor is effectively reduced. Especially for sensors which are made of special materials (such as Hastelloy, dual-phase steel, etc.) and have high values, some embodiments have remarkable cost advantage. In addition, for large-caliber sensors (especially with the caliber above DN100), the cost advantage of some embodiments is also remarkable.

### BRIEF DESCRIPTION OF THE DRAWINGS

FIG. 1 is a first sectional diagram of a Coriolis mass flowmeter;
FIG. 2 is a second sectional diagram of a Coriolis mass flowmeter;
FIG. 3 is a diagram of a flow tube.

### DETAILED DESCRIPTION OF THE EMBODIMENTS

To make the objectives, technical solutions and advantages of the present disclosure more clearly, the following clearly and completely describes the technical solutions in the embodiments of the present disclosure with reference to the accompanying drawings in the embodiments of the present disclosure.

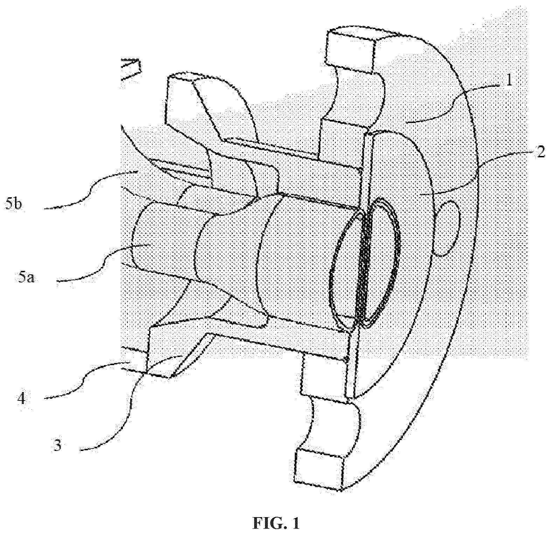

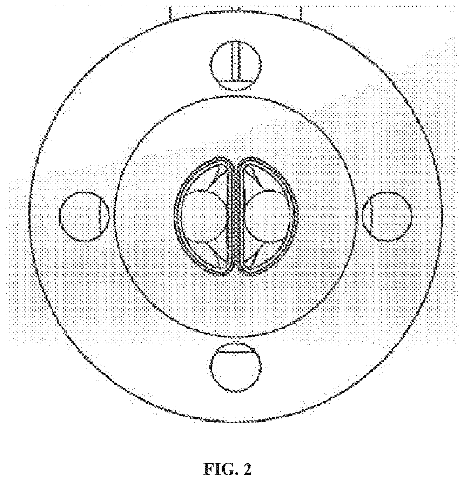

A Coriolis mass flowmeter with a non-circular section is provided in an embodiment of the present disclosure, as shown in FIG. 1, FIG. 2 and FIG. 3, the mass flowmeter includes a flow inlet device and a flow outlet device (as the flow inlet device and the flow outlet device have the same structure, only the flow inlet device or flow outlet device is shown in the figure). The flow inlet device and the flow outlet device each include a flange connecting disc (1), a flange sealing disc (2), a connector (3), and flow tubes (5a, 5b), and parts such as a housing, a coil assembly and a node plate which are not shown in the figure. It should be clear that although the number of the flow tubes in the figure is two, the present disclosure is not limited to double-tube mass flowmeters, and single-tube or multi-tube mass flowmeters are also applicable to the present disclosure. The above described parts are generally connected by argon arc welding or brazing, and certainly, the parts may also be connected by other connection methods according to their own characteristics, for example, the flange connecting plate (1) is threaded to the connector (3). According to the present disclosure, the traditional design of flange and flow divider is abandoned, and the design modes of the flange and flow divider are simplified, such that the flange and the flow divider no longer function as liquid contact parts, but only play a role of stiffness support. As for the flow tube, a design scheme of a flow tube with a non-circular cross section at a tube end is innovatively adopted, the flow tube extends to an end face of a flange so as to connect to a flange sealing disc, and thus a liquid contact surface is achieved by the flow tube.

The flange connecting disc (1) is configured to connect a flange of an external pipeline, the flange sealing disc (2) is attached to an outer surface of the flange connecting disc (1), and the flange sealing disc (2) plays a role of sealing. An outer surface of the flange sealing disc includes a sealing water line. The connector (3) is connected to the flange connecting disc, which replaces the original design of a flow divider and also plays a role of supporting the flow tube (5a\5b). A body of the flow tube is located in the connector, and an outlet of the flow tube is connected to the flange sealing disc.

The traditional flow tubes all adopt the design scheme of circular cross section of the flow tube although there are a variety of bent tube shapes. In addition, in the traditional sensor, there is a sudden change in the total cross-sectional area of two or more flow tubes and the cross-sectional area of an external pipeline, this change may lead to unsmooth fluid streamline and pressure loss. In the present embodiment, a design method of the special-shaped section is adopted at an inlet and an outlet of the flow tube.

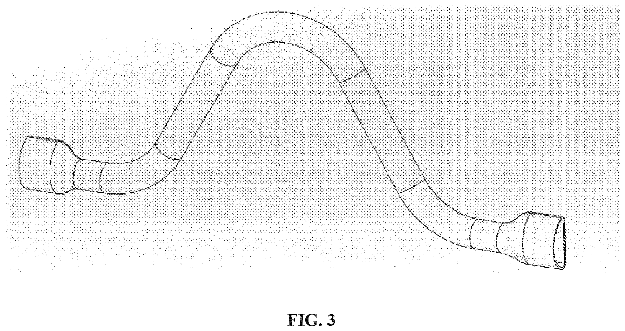

As shown in FIG. 3, a middle segment of the flow tube is a measurement body part, which has the circular section at a measurement area, and a non-circular section is adopted at an area of the inlet/outlet at both ends of the flow tube for dividing flow and connecting the external pipeline, this design can ensure that the flow tube is used as a liquid contact part with maximum efficiency, for example, to achieve the function of special tubes for resisting corrosion. Therefore, the flow tube can be more effectively integrated into an inner hole of the external pipeline to effectively play a role of dividing flow, making the streamline smoother, reducing pressure loss and improving measurement conditions.

The manufacturing of the flow tube shown in FIG.3 may be achieved through a variety of processes, for example, including but not limited to processes of 3D printing, reaming, internal high-pressure forming and the like.

The special-shaped cross sections of the flow tube inlet and the flow tube outlet of the present disclosure are not limited to the shape and sizes shown in the figure, and other non-circular cross sections, such as ellipse, polygon and other non-circular cross sections, are also applicable to the present disclosure.

In an example, the Coriolis mass flowmeter further includes a bridge (4), the bridge is configured to connect the connector of the flow inlet device and the connector of the flow outlet device.

In an example, the flow tube includes a first flow tube and a second flow tube. Through the change and adjustment of the dimension of the special-shaped cross section of the first flow tube and the second flow tube, stiffness of each of the first flow tube and the second flow tube is asymmetrical in two orthogonal directions of a cross section of a corresponding one of the first flow tube and the second flow tube. Therefore, the modal separation in two orthogonal directions can be flexibly achieved, and adverse effects such as interference from external conditions can be avoided when the flowmeter operates.

In an example, various parts of the present disclosure may be made of the same material, for example, stainless steel 316L or other replaceable materials. However, different materials can be used according to the actual demands of the product. The liquid contact parts such as the flange sealing disc (2) and flow tube (Sa\Sb) are made of expensive materials such as Hastelloy and super duplex steel, so as to improve the corrosion resistance of the product, while the other non-liquid-contact parts can be made of stainless steel 304 or other alternative materials with general price.

The present disclosure is not limited to a V-shaped tube shown in the figure, and generally known U-shaped tube, T-shaped tube, Ω -shaped tube or straight tube are all applicable to the present disclosure.

It should be noted that it is apparent to those skilled in the art that the present disclosure is not limited to the details of the above exemplary embodiments and can be realized in other specific forms without departing from the spirit or basic characteristics of the present disclosure. Therefore, the embodiments should be considered as exemplary and non-limiting in all aspects, and the scope of the present disclosure is defined by the appended claims rather than the above description, so it is intended to embrace all changes that fall within the meaning and range of equivalents of the claims in the present application. Any reference signs in the claims should not be regarded as limiting the claims involved.

## Claims

1. A Coriolis mass flowmeter with a non-circular section, comprising a flow inlet device and a flow outlet device, wherein the flow inlet device and the flow outlet device each comprise a flange connecting disc, a flange sealing disc, a connector, and a flow tube;
the flange sealing disc is attached to an outer surface of the flange connecting disc;
the connector is connected to the flange connecting disc;
a body of the flow tube is located in the connector, an outlet of the flow tube is connected to the flange sealing disc; and
a cross section of a measurement body of the flow tube is a circular cross section, and a cross section of an outlet part of the flow tube is a non-circular cross section.

2. The Coriolis mass flowmeter with a non-circular section according to claim 1, wherein the Coriolis mass flowmeter further comprises a bridge, the bridge is configured to connect the connector of the flow inlet device and the connector of the flow outlet device.

3. The Coriolis mass flowmeter with a non-circular section according to claim 1, wherein the flow tube comprises a first flow tube and a second flow tube, stiffness of each of the first flow tube and the second flow tube is asymmetrical in two orthogonal directions of a cross section of a corresponding one of the first flow tube and the second flow tube.

4. The Coriolis mass flowmeter with a non-circular section according to claim 1, wherein an outer surface of the flange sealing disc comprises a sealing water line.

5. The Coriolis mass flowmeter with a non-circular section according to claim 4, wherein the flange sealing disc and the flow tube are made of corrosion-resistant materials.
